# EUROPEAN PATENT SPECIFICATION

(11) **EP 1 654 694 B1**
(45) Date of publication and mention of the grant of the patent: **25.02.2009**
(21) Application number: 04769787.5
(22) Date of filing: 02.08.2004
(51) Int. Cl.: G06K 19/077

(54) **MODULE WITH AT LEAST TWO PAIRS OF MODULE CONNECTING PLATES**
MODUL MIT MINDESTENS ZWEI PAAREN VON MODULVERBINDUNGSPLATTEN
MODULE COMPORTANT AU MOINS DEUX PAIRES DE PLAQUES DE RACCORDEMENT DE MODULES

(30) Priority: 05.08.2003 EP 03102433
(43) Date of publication of application: 10.05.2006
(73) Proprietor: NXP B.V., 5656 AG Eindhoven (NL)
(72) Inventor: HUBMER, Paul, A-1101 Vienna (AT); SCHOBER, Joachim, A-1101 Vienna (AT)
(74) Representative: Röggla, Harald
(86) International application number: PCT/IB2004/051357
(87) International publication number: WO 2005/013191

(56) References cited:
- EP-A- 0 994 440
- EP-A- 1 258 370

## Description

The invention relates to a module with a chip with chip connection contacts, this module having a mid-point and being envisaged for use in a data carrier designed for contactless communication.

The invention furthermore relates to a data carrier that is designed for contactless communication and which contains a module with a chip with chip connection contacts and additionally at least one further electrical component - connected in an electrically conductive manner with the chip - with component connection contacts.

The invention furthermore relates to a lead frame configuration which is intended for the production of a module as described above in the first paragraph, and which has a mid-point.

EP 1 258 370 A1 discloses a non-contact ID card and a method of manufacturing the same. This non-contact ID card comprises an antenna circuit board and an interposer board having expanded electrodes formed on a substrate where an IC chip is embedded, the expanded electrodes being connected to electrodes of the IC chip. EP 0 994 440 A1 discloses a non-contact IC card including a chip with two pairs of different terminals which exhibit 180° rotation invariance.

A module in accordance with the design described above in the first paragraph and a data carrier in accordance with the design described above in the second paragraph and a lead frame configuration in accordance with the design described above in the third are known from the patent document WO 02/095673 A1. In the case of the known solutions, the design is such that the module has a chip with just two chip connection contacts and that the module has just two module connecting plates, wherein each module connecting plate is designed to be electrically conductive and is connected in an electrically conductive manner to a chip connection contact and is envisaged for the electrically conductive connection with a component connection contact of a single further component.

The known designs thus have an important restriction, namely because these designs are suitable only for the module and the chip contained in this module to work together with a single further component with two component connection contacts, namely with a transfer coil with two coil connection contacts. In the case of the known designs, the two module connecting plates can be brought into contact connection in a non-interchangeable manner only with these two component connection contacts, wherein it is irrelevant with which polarity the further component, i.e. the transmission coil, is connected with the module connecting plates and consequently with the chip connection contacts. The electrically conductive connection between the chip and the further component can thus advantageously be realized in accordance with two opposed polarities, which represents a considerable advantage in the production of a data carrier, since both in the case of module connecting plates located in their starting position as well as in the case of module connecting plates located in a position that is rotated by 180° relative to the starting position, each module can be connected with the single further electrical component.

It is an object of the invention to eliminate the restriction mentioned above and to realize an improved module and an improved data carrier and an improved lead frame configuration.

To achieve the object described above, in the case of a module according to the invention, features in accordance with the invention are provided, so that a module according to the invention can be characterized in the manner as stated in claim 1 position of the module connecting plates, the shapes of the plate surfaces of the module connecting plates result in a particular plate pattern and differ such that when all the module connecting plates are jointly rotated, starting from the starting position, around an axis that runs perpendicular in relation to the plate surfaces and passes through the mid-point, the same plate pattern always results after joint rotation around 180° in each case.

To achieve the object described above, in the case of a data carrier according to the invention, features in accordance with the invention are provided, so that a data carrier according to the invention can be characterized in the manner described below, namely:

A data carrier according to claim 6.

To achieve the object described above, in the case of a method of production according to the invention, features in accordance with the invention are provided, so that a method, according to the invention can be characterized in the manner described below, namely: a method according to claim 7.

Through the provision of the features in accordance with the invention, in a structurally simple manner and with only very little additional expenditure it is achieved that a module according to the invention is suitable not only for working together with a single further component of a data carrier, but also that a module according to the invention is suitable for working together with at least two further components of a data carrier. The following can be provided as further components: a transmission coil, a display device, for example an LED, a safety switch that can be operated manually, a temperature measuring device, a moisture measuring device, a power supply device with solar cells, and various others. By providing the measures according to the invention, in the connection mentioned above, the advantage is achieved that despite the use of several further components, the electrically conductive connection between the chip and the several further components can be realized in an advantageous manner in the case of each of these components, in accordance with two opposed polarities. Furthermore, in an advantageous manner it is achieved that the module connecting plates can be easily and safely distinguished from one another, since the shapes of the plate surfaces of the module connecting plates of different pair are different. Through this different design of the module connecting plates of different pairs of module connecting places, it is achieved that despite the use of several further components, the possibility of producing a wrong contact connection between the module connecting plates and the component connection contacts is excluded, namely because the several module connecting plates yield a particular plate pattern only in their starting position and in the position opposite the starting position, rotated around 180° in relation to the starting position, and therefore with the aid of - for example - optical means, but also with the aid of mechanical means or by means that work in other ways, it is easily possible to detect the particular plate patterns and to permit and effect a connection of the several module connecting plates to the component connection contacts only when the several module connecting plates are located in their starting position or in the position opposite the starting position rotated around 180° relative to it, and consequently yield the desired particular plate pattern. It is thus always ensured that despite the use of several further components, each component is connected via its component connection contacts with the correct module connecting plates, and consequently with the correct chip connection contacts.

It may be mentioned that from the patent document US 5 005 282, we know of a module which however is intended for use in a data carrier which is intended and designed exclusively for contact-based communication. Here, the known module has a total of eight module connecting plates, which however are not designed for electrically conductive connection with additional further components, since in the case of the known module this is not necessary and consequently not useful either. The eight module connecting plates have, in part, different plate surfaces which in a starting position likewise yield a particular plate pattern, but the shapes of the plate surfaces differ such that when all the module connecting plates are jointly rotated, starting from the starting position, around an axis that runs perpendicular in relation to the plate surfaces and passes through the mid-point, the same plate pattern results only after joint rotation around 360° in each case, and not after joint rotation around just 180° in each case, so that the production advantages that are made possible by the 180° repetition of the plate pattern cannot be attained in the case of the known solution. In constructional respects, the solution known from the patent document US 5 005 282 is thus clearly different from the solutions according to the invention, and does not offer the advantages of the solutions according to the invention.

In the case of the solutions according to the invention, the module connecting plates can for example extend away from the mid-point in four directions that run perpendicular to one another. In the case of the solutions according to the invention, it has however been shown to be very advantageous if in addition the features as claimed in claim 2 or claim 9 are provided. In terms of constructional design, such a design comes very close to the previous and known designs which are suitable only for connecting a single further component to a module, so that assembly devices that already exist and have been used to date can also be used for assembling modules according to the invention in a data carrier. Furthermore, such a design is advantageous in respect of a particularly high level of security against wrong connection of module connecting plates and component connection contacts. Such a design is moreover very simple.

In the case of the solutions according to the invention, which are described above, the shapes of the plate surfaces of two module connecting plates lying next to each other can differ from one another as a consequence of the courses of the circumferences of these two module connecting plates. It has however been shown to be very advantageous if the shapes of the plate surfaces of two module connecting plates lying next to one another are different as a consequence of the characteristics of the separation zone separating these two module connecting plates. This has the advantage that in their circumferential area, the plate surfaces do not need to have any special courses and features, and consequently can have the same courses apart from the separation zone, as is known from existing module connecting plates.

In the case of the solutions according to the invention, the shape of the separation zone can be used as the characteristic of the separation zone. For example, the separation zone can be designed to be arc-shaped or saw-tooth-shaped or wave-shaped. It has however proved to be very advantageous if in the case of the solutions according to the invention, as a characteristic of the separation zone its course is utilized, wherein it is particularly advantageous if a separation zone lying between two module connecting plates that lie next to one another runs obliquely to the main direction. This is advantageous in respect of a very simple constructional design and in respect of simple and economical producibility of the separation zone.

It has been shown to be particularly advantageous here if the separation zone runs in a straight line. This is advantageous because through this, it is made possible for the separation zone to be produced with the aid of different methods and in a simple manner.

In the case of the solutions according to the invention, for producing the module and the module connecting plates one can use a synthetic, for example fiber-reinforced, which is equipped with an electrically conductive layer, wherein the electrically conductive layer is utilized to form the module connecting plates. It has however been shown to be very advantageous if the module connecting plates have been produced with the aid of a lead frame configuration. Such a design is particularly advantageous since a conductor frame configuration is practically not hygroscopic at all, and is consequently very resistant to the influences of moisture.

These and other aspects of the invention are apparent from and will be elucidated with reference to the embodiments described hereinafter.

The invention will be described further below, on the basis of seven design examples illustrated in the drawings, without the invention being restricted to these examples.

In the drawings,
Figure 1 shows, in a schematic manner, in a view from above, a module according to a first design example of the invention.
Figure 2 shows, in a schematic manner, in a view from above, a data carrier according to the invention with a module according to Figure 1.
Figure 3 shows, in a schematic manner, in a view from above, a part of a lead frame band which contains a number of lead frame configurations, wherein both the lead frame configurations according to a first design example of the invention as well as lead frame combinations according to the prior art are provided.
Figure 4 shows, in a schematic manner, in plan view, a total of six further lead frame configurations in accordance with six further design examples of the invention.

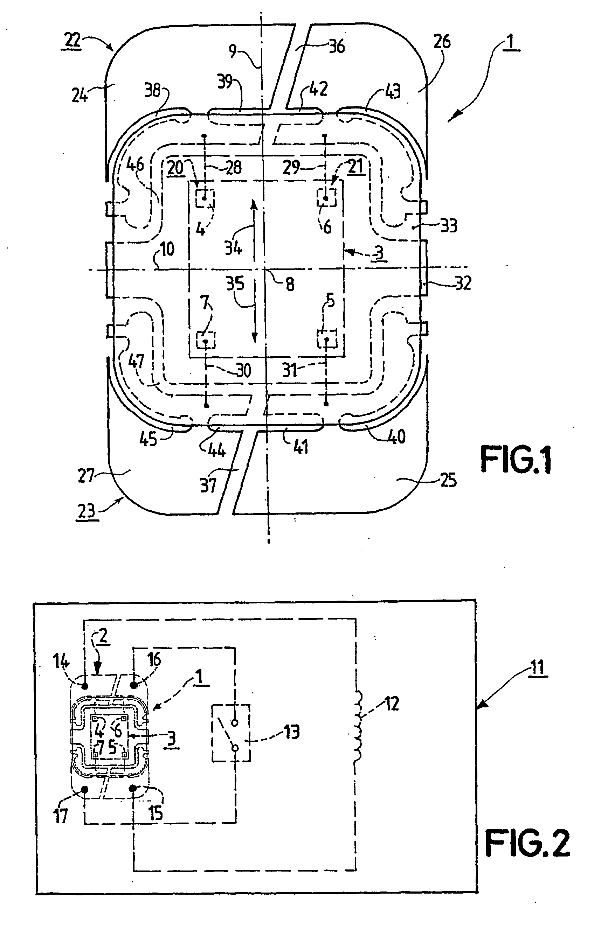

Figure 1 shows a module 1. The module 1 is designed to be plate-shaped and has an overall height that is as low possible: in this case, this is around 220 µm. The overall height can lie within a range of between 190 µm and 400 µm. The module 1 comprises a lead frame configuration 2 and a chip 3. The chip 3 contains a circuit, not shown, with the aid of which contactless communication can be carried out with a communication station that is suitable for this. The chip 3 has chip connection contacts 4, 5 and 6, 7. We shall go into further detail about the purpose of the connection contacts 4 to 7 below.

The module 1 and the lead frame configuration 2 have a mid-point 8 and a main axis 9 that passes through the mid-point 8, and a secondary axis 10 that likewise passes through the mid-point 8.

The module 1 is intended for use in a data carrier 11 that is designed for contactless communication. The data carrier 11 is shown in Figure 2. The data carrier 11 contains, as an electrical component, the module 1 with the chip 3 which has the chip connection contacts 4, 5, 6 and 7. Furthermore, the data carrier 11 contains two further electrical components, of which the first further component is formed by a transmission coil 12 for contactless communication, and the second further component is formed by a safety switch 13 for blocking or releasing the functionality of the chip 3 and consequently of the data carrier 11. The first further component, i.e. the transmission coil 12, has two component connection contacts, namely two coil connection contacts 14 and 15. The second further component, i.e. the safety switch 13, likewise has two component connection contacts, namely two switch connection contacts 16 and 17. The coil connection contacts 14 and 15 and the switch connection contacts 16 and 17 are connected to the chip connection contacts 4 and 5 or 6 and 7 in an electrically conductive manner; this will be dealt with in greater detail below. In the case of the data carrier 11, due to the electrical characteristics of the transmission coil 12 and of the safety switch 13, the situation is such that the electrically conductive connection between the chip 3 or the chip connection contacts 4, 5 and 6,7 and the further components, i.e. the transmission coil 12 and the safety switch 13, can be realized in accordance with two opposed polarities. In the case of the solution illustrated in Figure 2, the first coil connection contact 14 is connected in an electrically conductive manner to the first chip connection contact 4, and the second coil connection contact 15 to the second chip connection contact 5, and the first switch connection contact 16 to the third chip connection contact 6, and the second switch connection contact 17 to the fourth chip connection contact 7. It could however also be the case that the module 1 and consequently the chip 3 is installed in the data carrier 11 in a position rotated around 180°, wherein the second chip connection contact 5 is then connected to the first coil connection contact 14, and the first chip connection contact 4 to the second coil connection contact 15, and the fourth chip connection contact 7 to the first switch connection contact 16, and the third chip connection contact 6 to the second switch connection contact 17. In the case of this solution too, perfect functioning of the data carriers 11 is ensured.

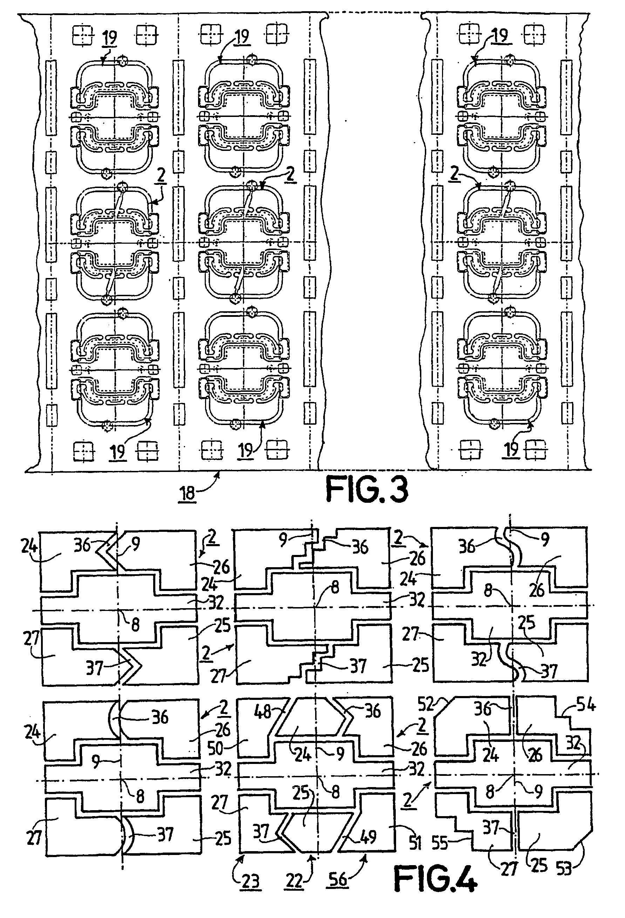

As has already been mentioned above, the lead frame configuration 2 forms an important constituent component of the module 1. A large number of such lead frame configurations 2 is contained in a lead frame tape 18, which is shown in part in Figure 3. The lead frame tape 18 contains the lead frame configurations 2, wherein the number of lead frame configurations 2 depends on the length of the lead frame tape 18. In addition to the lead frame configurations 2 which are of a design in accordance with the invention, also provided in the case of the lead frame tape 18 are further lead frames 19 of a design which conforms to the known prior art.

As has also been mentioned above, the chip 3 has four chip connection contacts 4, 5, 6 and 7 altogether. These four chip connection contacts 4, 5, 6 and 7 form two pairs 20 and 21 of chip connection contacts here, wherein the first pair 20 comprises the first chip connection contact 4 and the second chip connection contact 5, and wherein the second pair 21 comprises the third chip connection contact 6 and the fourth chip connection contact 7.

In the case of the module 1 and in the case of the lead plate configuration 2, the design is such that the module 1 and the lead frame configuration 2 has two pairs 22 and 23 of module connecting plates 24, 25 and 26, 27. Here, the first module connecting plate 24 and the second module connecting plate 25 form the first pair 22 of module connecting plates. The third module connecting plate 26 and the fourth module connecting plate 27 form the second pair 23 of module connecting plates. The module connecting plates 24 and 25 or 26 and 27 of each pair 22 or 23 are provided for the electrically conductive connection with the component connection contacts 14 and 15 or 16 and 17 of, in each case, one further component, namely the transmission coil 12 or the safety switch 13. The module connecting plates 24, 25, 26 and 27 have thus been produced with the aid of the lead frame configuration 2. This means that the module connecting plates 24, 25, 26 and 27 are designed to be electrically conductive. The module connecting plates 24, 25, 26 and 27 are connected in an electrically conductive manner to the chip connection contacts 4, 5, 6 and 7, and in fact such that the first module connecting plate 24 is connected in an electrically conductive manner via a first bond wire 28 with the first chip connection contact 4, and the second module connecting plate 25 via a second bond wire 29 with the second chip connection contact 5, and the third module connecting plate 26 via a third bond wire 30 with the third chip connection contact 6, and the fourth module connecting plate 27 via a fourth bond wire 31 with the fourth chip connection contact 7.

In addition to the four module connecting plates 24, 25, 26 and 27, the module 1 and the lead frame configuration 2 have a carrier plate 32 lying between the four module connecting plates, with the chip 3 being fastened to this carrier plate 32 with the aid of an adhesive bond, not shown. For mechanically holding together the module connecting plates 24, 25, 26 and 27 and the carrier plate 32, and for mechanically protecting the chip 3 as well as the chip connection contacts 4, 5, 6 and 7 and the bond wires 28, 29, 30 and 31, a mainly plastic, plate-shaped protective covering 33 is provided, as has long been known for familiar modules.

In the case of the module 1 and the lead frame configuration 2, each module connecting plate 24, 25, 26 and 27 has a plate surface with a particular shape. Here, the shapes of the plate surfaces of the two module connecting plates 24, 25 or 26 and 27 of each pair 22 or 23 are identical, and the shapes of the plate surfaces of the module connecting plates 24, 26 or 25, 27 of different pairs 22 and 23 are different. In a starting position of the module connecting plates 24, 25, 26 and 27, the shapes of the plate surfaces of the four module connecting plates 24, 25, 26 and 27 yield a particular plate pattern, as can be seen from Figure 1, but also from Figures 2 and 3. In the Figures 1, 2 and 3, the module connecting plates 24, 25, 26 and 27 are shown in the aforementioned starting position. The shapes of the plate surfaces of the four module connecting plates 24, 25, 26 and 27 vary here such that, starting from the starting position shown in the Figures 1, 2 and 3, when all the module connecting plates 24, 25, 26 and 27 are jointly rotated around an axis that runs perpendicular in relation to the plate surfaces and passes through the mid-point 8, the same plate pattern always results after common rotation around 180° in each case.

Of each pair 22 or 23 of module connecting plates 24, 25 and 26, 27, one module connecting plate 24 or 26 points in a first direction, indicated by the arrow 34, that runs parallel to the main axis 9 and points away from the mid-point 8, and the other module connecting plate 25 or 27 points in a second direction, indicated by the arrow 35, that runs parallel to the main axis 9 and opposite to the first direction 34 and points away from the mid-point 8. Here, the module connecting plates 24 and 26 that point in the first direction 34 lie next to one another and are separated from one another by a separation zone 36. Furthermore, the module connecting plates 25 and 27 that point in the second direction 35 lie next to one another and are separated from one another by a separation zone 37. Advantageously, the shapes of the plate surfaces of two module connecting plates 24, 26 or 25, 27 lying next to one another are different. In the present case, the different shapes of the plate surfaces of two module connecting plates 24, 26 or 25, 27 lying next to one another are achieved as a consequence of the characteristics of the separation zone 36 or 37 that separates these two module connecting plates 24, 26 or 25, 27. In the present case, the characteristic of each separation zone 36 or 37 that is decisive for the different shapes of the plate surfaces is formed by the course of the respective separation zone 36 or 37. As is apparent from Figures 1 to 3, the two separation zones 36 and 37 run between the module connecting plates 24, 26 and 25, 27 that lie next to one another run obliquely to the main direction 9, and consequently also obliquely to the secondary direction 10. The two separation zones 36 and 37 run in a straight line here.

It should also be mentioned that provided in the module connecting plates 24, 25, 26 and 27 are slits 38, 39, 40, 41, 42, 43, 44 and 45; the purpose of these will not be dealt with any further here, since this of no consequence in this connection. It should further be mentioned that provided between the carrier plate 32 on the one hand and the module connecting plates 24 and 26 that lie next to one another on the other hand, there is an essentially U-shaped first separation slit 46, into which first separation slits 46 the separation zone 36 opens. It is further mentioned that provided between the carrier plate 32 on the one hand and the module connecting plates 25 and 27 lying next to one another on the other hand there is an essentially U-shaped second separation slit 47, into which second separation slit 47 the separation zone 37 opens.

In the case of the module 1 according to Figure 1, in an advantageous and simple manner it is achieved that with the chip 3 of the module 1, two further components, namely the transmission coil 12 and the safety switch 13, can be connected, wherein this connection is possible in two positions of the module 1 that are rotated around 180° to one another, which is advantageous in respect of production of the data carrier 11 being as simple as possible, since the module 1 can be introduced into the data carrier 11 and connected to the data carrier 11 in two different positions. Due to the design of the module connecting plates 24, 25, 26 and 27 differing in pairs in respect of the shape of the plate surfaces, the module connecting plates 24, 25, 26 and 27 and the plate patterns formed by the module connecting plates 24, 25, 26 and 27 can always be perfectly recognized and detected if necessary, so that it is always ensured with certainty that the correct further components are brought together in an electrically conductive connection with the correct module connecting plates 24, 25, 26 and 27 intended for this. This is important particularly in the case of automated production of data carriers, since in the case of such automated production, it is possible or it is the practice for modules 1 to be brought together with the data carrier blanks of data carriers in an automated manner, wherein however the undesirable situation can occur that modules 1 are brought together with data carrier blanks in a position that is rotated around the main axis 9 by 180° relative to the starting position shown in Figure 1, or in a position that is rotated around the secondary axis 10 by 180° relative to the starting position shown in Figure 1, which in the event of actual installation of a module 1 that had been brought together with a data carrier blank in such a rotated position would result in a non-functional data carrier, which however is avoided with certainty on account of the design of module 1 in accordance with the invention, with its module connecting plates that differ in pairs.

Figure 4 shows, in a schematic manner, further design variants of lead frame configuration 2 according to the invention.

In the case of the lead frame configuration 2 shown in the left-hand upper illustration according to Figure 4, the separation zones 36 and 37 are designed to be wedge-shaped.

In the case of the lead frame configuration 2 shown in the middle upper illustration according to Figure 4, the separation zones 36 and 37 are designed in a step-wise manner.

In the case of the lead frame configuration 2 shown in the right-hand upper illustration, the two separation zones 36 and 37 are designed to be S-shaped. These separation zones 36 and 37 can however also be designed to be wave-shaped, i.e. in a multiple S-shape.

In the case of the lead frame configuration 2 shown in the left-hand lower illustration according to Figure 4, the separation zones 36 and 37 are designed in an arc shape.

In the case of the lead frame configuration 2 shown in the middle lower illustration, in addition to the two separation zones 36 and 37 that are designed in a wedge shape, two further separation zones 48 and 49, running obliquely and in a straight line, are provided, so that in the case of this lead frame configuration 2, six module connecting plates 24, 25, 26, 27, 50 and 51 are provided, wherein the fifth module connecting plate 50 and the sixth module connecting plate 51 form a third pair 56 of module connecting plates. This means that in the case of a module that is realized with the aid of this lead frame configuration 2, a total of three further components can be connected in an electrically conductive manner with this module or with the chip of this module.

In the case of the lead frame configurations 2 described above, the course of the envisaged separation zones is selected as a characteristic for the shapes of the plate surfaces of the module connecting plates that differ in pairs. Instead of the course of the separation zones, one can however also apply the course of the circumferential limitation of the module connecting plates lying next to one another as the characteristic for the different shapes of the plate surfaces. Such a lead frame configuration 2 is shown in the right-hand lower illustration according to Figure 4. In the case of this lead frame configuration 2, the two module connecting plates 24 and 25 of the first pair 22 each have a bevel 52 or 53 in the course of their circumference. The two module connecting plates 26 and 27 of the second pair 23 have a course 54 and 55 of a step-wise design in their circumferential limitation.

It should be mentioned that the designs described above, and also other designs of modules and lead frame configurations according to the invention, are also suitable for those data carriers that are suitable not only for contactless communication but also additionally for contact-based communication and accordingly are equipped with communication contacts, for example with communication contacts in accordance with the international standard ISO 7816-2.

It should furthermore be mentioned that in the case of a data carrier according to the invention, as a further component one can also use a so-called electrical quadripole, this quadripole having four connections which, with the aid of two pairs of module connecting plates, are connected to chip connection contacts of a chip of this module that are provided for this purpose.

It should furthermore be mentioned that a data carrier according to the invention can be designed in the form of a card. Such a data carrier according to the invention can however also be a constituent part of a product, and can be accommodated or installed in the product. Such a product can for example be a device from the field of entertainment electronics or a communication device such as a mobile telephone. A product of this type can however also be formed by a passport, wherein a module according to the invention is embedded in a paper page of the passport.

It should furthermore be mentioned that in the case of the module 1 or data carrier 11 according to the invention, as described above, a chip 3 is provided in semiconductor technology. A chip of this type can however also be produced on a polymer base.

It should furthermore be mentioned that in the case of the design examples described above, each module contains only one chip. This does not necessarily need to be the case, since such a module can also contain two, three or even more chips.

## Claims

1. A module (1) comprising a lead frame configuration (2) and a chip (3) with chip connection contacts (4, 5, 6, 7),
said module (1) having a mid-point (8), and said module (1) being envisaged for use in a data carrier (11) designed for contactless communication,
wherein the module (1) has a chip (3) with at least two pairs (20, 21) of chip connection contacts (4, 5, 6, 7), and wherein the lead frame configuration (2) has at least two pairs (22, 23; 22, 23, 56) of module connecting plates (24, 25, 26, 27; 24, 25, 26, 27, 50, 51), wherein the two module connecting plates (24, 25, 26, 27; 24, 25, 26, 27, 50, 51) of each pair (22, 23; 22, 23, 56) are provided for the electrically conductive connection with the component connection contacts (4, 5, 6, 7) of in each case one of at least two further components (12, 13), and wherein each module connecting plate (24, 25, 26, 27; 24, 25, 26, 27, 50, 51) has a plate surface with a particular shape and is designed to be electrically conductive and is connected in an electrically conductive manner with a chip connection contact (4, 5, 6, 7), and wherein the shapes of the plate surfaces of the two module connecting plates (24, 25, 26, 27; 24, 25, 26, 27, 50, 51) of each pair (22, 23; 22, 23, 56) are identical, and wherein the shapes of the plate surfaces of the module connecting plates (24, 25, 26, 27; 24, 25, 26, 27, 50, 51) of different pairs (22, 23; 22, 23, 56) are different, and wherein in a starting position of the module connecting plates, the shapes of the plate surfaces of the module connecting plates (24, 25, 26, 27; 24, 25, 26, 27, 50, 51) result in a particular plate pattern and differ such that when, starting from the starting position, all the module connecting plates (24, 25, 26, 27; 24, 25, 26, 27, 50, 51) are jointly rotated around an axis that runs perpendicular in relation to the plate surfaces and that passes through the mid-point (8), the same plate pattern always results after joint rotation around 180° in each case; wherein a connection of the module connecting plates (24, 25, 26, 27) to a first, second, third and fourth component connection contacts (14, 15, 16, 17) of a carrier (11) in two positions of the module (1) that are rotated around 180° to one another results in the same electrical functionality.

2. A module (1) as claimed in claim 1, wherein the module (1) has a main axis (9) running through the mid-point (8), and wherein of each pair (22, 23; 22, 23, 56) of module connecting plates, one module connecting plate (24, 26; 24, 26, 50) points in a first direction (34) that runs parallel to the main axis (9) and points away from the mid-point (8), and the other module connecting plate (25, 27; 25, 27, 51) points in a second direction (35) that runs parallel to the main axis (9) and runs opposite to the first direction (34) and points away from the mid-point (8), and wherein the module connecting plates (24, 26; 50, 24, 26) that point in the first direction (34) lie next to one another and are separated from one another by a separation zone (36; 48, 36) in each case, and wherein the module connecting plates (25, 27; 25, 27, 51) that point in the second direction (35) lie next to one another and are separated from one another by a separation zone (37; 49, 37) in each case, and wherein the shapes of the plate surfaces of two module connecting plates (24, 26, 27, 25; 50, 24, 26, 27, 25, 51) lying next to one another are different.

3. A module (1) as claimed in claim 2, wherein the shapes of the plate surfaces of two module connecting plates (24, 26, 27, 25; 50, 24, 26, 27, 25, 51) lying next to one another are different as a consequence of the characteristics of the separation zone (36, 37; 48, 36, 37, 49) that separates these two module connecting plates.

4. A module (1) as claimed in claim 3, wherein at least one separation zone (36, 37; 48, 49) lying between two module connecting plates (24, 26, 27, 25; 50, 26, 25, 51) that lie next to one another runs obliquely to the main direction.

5. A module (1) as claimed in claim 4, wherein the separation zone (36, 37; 48, 49) runs in a straight line.

6. A data carrier (11) that is designed for contactless communication and contains a module (1) with a chip (3) with chip connection contacts (4, 5, 6, 7) and additionally at least one further electrical component (12, 13) - connected in an electrically conductive manner with the chip (3) - with component connection contacts (14, 15, 16, 17), and wherein the module (1) is designed as claimed in any one of the claims 1 to 5, and
wherein the module connecting plates (24, 25, 26, 27; 24, 25, 26, 27, 50, 51) of each pair (22, 23; 22, 23, 56) of module connecting plates is connected with the component connection contacts (14, 15, 16, 17) of in each case one of at least two further components (12, 13).

7. Method of production of a module (1) as claimed in any one of the claims 1 to 5 using a lead frame configuration (2) which is provided for the module and which has a mid-point (8),wherein the lead frame configuration (2) has at least two pairs (22, 23; 22, 23, 56) of module connecting plates (24, 25, 26, 27; 24, 25, 26, 27,50,51),
wherein the two module connecting plates (24, 25, 26, 27; 24, 25, 26, 27, 50, 51) of each pair (22, 23; 22, 23, 56) are intended for the electrically conductive connection with the component connection contacts (4, 5, 6, 7) of in each case one of at least two further components (12, 13), and wherein each module connecting plate (24, 25, 26, 27; 24, 25, 26, 27, 50, 51) has a plate surface with a particular shape and is designed to be electrically conductive and is connected in an electrically conductive manner to a chip connection contact (4, 5, 6, 7), and wherein the shapes of the plate surfaces of the two module connecting plates (24, 25, 26, 27; 24, 25, 26, 27, 50, 51) of each pair (22, 23; 22, 23, 56) are identical, and wherein the shapes of the plate surfaces of the module connecting plates (24, 25, 26, 27; 24, 25, 26, 27, 50, 51) of different pairs (22, 23; 22, 23, 56) are different, and wherein in a starting position of the module connecting plates, the shapes of the plate surfaces of the module connecting plates (24, 25, 26, 27; 24, 25, 26, 27, 50, 51) yield a particular plate pattern and differ such that, starting from the starting position, when all the module connecting plates (24, 25, 26, 27; 24, 25, 26, 27, 50, 51) are jointly turned around an axis that runs perpendicular in relation to the plate surfaces and passes through the mid-point (8), the same plate pattern always results after joint turning around 180° in each case.

8. Method of production as claimed in claim 7, wherein the lead frame configuration (2) has a main axis (9) that passes through the mid-point (8), and
wherein of each pair (22, 23; 22, 23, 56) of module connecting plates, one module connecting plate (24, 26; 24, 26, 50) points in a first direction (34) that runs parallel to the main axis (9) and points away from the mid-point (8), and the other module connecting plate (25, 27; 25, 27, 51) points in a second direction (35) that runs parallel to the main axis (9) and runs opposite to the first direction (34) and points away from the mid-point (8), and wherein the module connecting plates (24, 26; 50, 24, 26) that point in the first direction (34) lie next to one another and are separated from one another by a separation zone (36; 48, 36) in each case, and wherein the module connecting plates (25, 27; 25, 27, 51) that point in the second direction (35) lie next to one another and are each separated from one another by a separation zone (37; 49, 37) in each case, and wherein the shapes of the plate surfaces of two module connecting plates (24, 26, 27, 25; 50, 24, 26, 27, 25, 51) that lie next to one another are different.

9. Method of production as claimed in claim 8, wherein the shapes of the plate surfaces of two module connecting plates (24, 26, 27, 25; 50, 24, 26, 27, 25, 51) that lie next to one another are different as a consequence of the characteristics of the separation zone (36, 37; 48, 36, 37, 49) that separates these two module connecting plates, and wherein at least one separation zone (36, 37; 48, 49) lying between two module connecting plates (24, 26, 27, 25; 20 50, 26, 25, 51) that lie next to one another runs obliquely to the main direction.

10. Method of production as claimed in claim 9, wherein the separation zone (36, 37; 48, 49) runs in a straight line.

## Patentansprüche

1. Ein Modul (1), das eine Systemträgerkonfiguration (2) und einen Chip (3) mit Chipverbindungskontakten (4, 5, 6, 7) umfasst,
wobei das Modul (1) einen Mittelpunkt (8) hat und das Modul (1) zur Verwendung in einem zur kontaktlosen Kommunikation gestalteten Datenträger (11) bestimmt ist,
wobei das Modul (1) einen Chip (3) mit mindestens zwei Paaren (20, 21) von Chipverbindungskontakten (4, 5, 6, 7) hat und wobei die Systemträgerkonfiguration (2) mindestens zwei Paare (22, 23; 22, 23, 56) von Modulverbindungsplatten (24, 25, 26, 27; 24, 25, 26, 27, 50, 51) hat, wobei die beiden Modulverbindungsplatten (24, 25, 26, 27; 24, 25, 26, 27, 50, 51) jedes Paars (22, 23; 22, 23, 56) zur elektrisch leitenden Verbindung mit den Komponentenverbindungskontakten (4, 5, 6, 7) von jeweils einer von mindestens zwei weiteren Komponenten (12, 13) vorgesehen sind und wobei jede Modulverbindungsplatte (24, 25, 26, 27; 24, 25, 26, 27, 50, 51) eine Plattenoberfläche mit einer speziellen Form hat und so gestaltet ist, dass sie elektrisch leitend ist, und auf elektrisch leitende Weise mit einem Chipverbindungskontakt (4, 5, 6, 7) verbunden ist und wobei die Formen der Plattenoberflächen der beiden Modulverbindungsplatten (24, 25, 26, 27; 24, 25, 26, 27, 50, 51) jedes Paars (22, 23; 22, 23, 56) identisch sind und wobei die Formen der Plattenoberflächen der Modulverbindungsplatten (24, 25, 26, 27; 24, 25, 26, 27, 50, 51) unterschiedlicher Paare (22, 23; 22, 23, 56) unterschiedlich sind und wobei in einer Ausgangsposition der Modulverbindungsplatten die Formen der Plattenoberflächen der Modulverbindungsplatten (24, 25, 26, 27; 24, 25, 26, 27, 50, 51) zu einem speziellen Plattenmuster führen und sich so unterscheiden, dass, wenn beginnend von der Ausgangsposition alle Modulverbindungsplatten (24, 25, 26, 27; 24, 25, 26, 27, 50, 51) um eine Achse gemeinsam gedreht werden, die in Relation zu den Plattenoberflächen senkrecht verläuft und die den Mittelpunkt (8) durchläuft, sich jeweils stets das gleiche Plattenmuster nach gemeinsamer Drehung um 180° ergibt; wobei eine Verbindung der Modulverbindungsplatten (24, 25, 26, 27) mit einem ersten, zweiten, dritten und vierten Komponentenverbindungskontakt (14, 15, 16, 17) eines Trägers (11) in zwei Positionen des Moduls (1), die um 180° zueinander gedreht sind, zur gleichen elektrischen Funktionalität führt.

2. Modul (1) nach Anspruch 1, wobei das Modul (1) eine den Mittelpunkt (8) durchlaufende Hauptachse (9) hat und wobei vonjedem Paar (22, 23; 22, 23, 56) von Modulverbindungsplatten eine Modulverbindungsplatte (24, 26; 24, 26, 50) in eine erste Richtung (34) weist, die parallel zur Hauptachse (9) verläuft und vom Mittelpunkt (8) wegweist, und die andere Modulverbindungsplatte (25, 27; 25, 27, 51) in eine zweite Richtung (35) weist, die parallel zur Hauptachse (9) verläuft und entgegengesetzt zur ersten Richtung (34) verläuft sowie vom Mittelpunkt (8) wegweist, und wobei die Modulverbindungsplatten (24, 26; 50, 24, 26), die in die erste Richtung (34) weisen, nebeneinander liegen und voneinander jeweils durch eine Trennzone (36; 48, 36) getrennt sind und wobei die Modulverbindungsplatten (25, 27; 25, 27, 51), die in die zweite Richtung (35) weisen, nebeneinander liegen und voneinander jeweils durch eine Trennzone (37; 49, 37) getrennt sind und wobei die Formen der Plattenoberflächen zweier nebeneinander liegender Modulverbindungsplatten (24, 26, 27, 25; 50, 24, 26, 27, 25, 51) unterschiedlich sind.

3. Modul (1) nach Anspruch 2, wobei die Formen der Plattenoberffächen zweier nebeneinander liegender Modulverbindungsplatten (24, 26, 27, 25; 50, 24, 26, 27, 25, 51) als Folge der Kennwerte der Trennzone (36, 37; 48, 36, 37, 49) unterschiedlich sind, die diese beiden Modulverbindungsplatten trennt.

4. Modul (1) nach Anspruch 3, wobei mindestens eine Trennzone (36, 37; 48, 49), die zwischen zwei Modulverbindungsplatten (24, 26, 27, 25; 50, 26, 25, 51) liegt, die nebeneinander liegen, schräg zur Hauptrichtung verläuft.

5. Modul (1) nach Anspruch 4, wobei die Trennzone (36, 37; 48, 49) in einer Geraden verläuft.

6. Datenträger (11), der zur kontaktlosen Kommunikation gestaltet ist und ein Modul (1) mit einem Chip (3) mit Chipverbindungskontakten (4, 5, 6, 7) und zusätzlich mindestens eine weitere elektrische Komponente (12, 13) enthält, die auf elektrisch leitende Weise mit dem Chip (3) verbunden ist, mit Komponentenverbindungskontakten (14, 15, 16, 17), und wobei das Modul (1) nach einem der Ansprüche 1 bis 5 gestaltet ist und wobei die Modulverbindungsplatten (24, 25, 26, 27; 24, 25, 26, 27, 50, 51) jedes Paars (22, 23; 22, 23, 56) von Modulverbindungsplatten mit den Komponentenverbindungskontakten (14, 15, 16, 17) von jeweils einer von mindestens zwei weiteren Komponenten (12, 13) verbunden sind.

7. Verfahren zur Herstellung eines Moduls (1) nach einem der Ansprüche 1 bis 5 mit Hilfe einer Systemträgerkonfiguration (2), die für das Modul vorgesehen ist und die einen Mittelpunkt (8) hat, wobei die Systemträgerkonfiguration (2) mindestens zwei Paare (22, 23; 22, 23, 56) von Modulverbindungsplatten (24, 25, 26, 27; 24, 25, 26, 27, 50, 51) hat,
wobei die beiden Modulverbindungsplatten (24, 25, 26, 27; 24, 25, 26, 27, 50, 51) jedes Paars (22, 23; 22, 23, 56) zur elektrisch leitenden Verbindung mit den Komponentenverbindungskontakten (4, 5, 6, 7) von jeweils einer von mindestens zwei weiteren Komponenten (12, 13) bestimmt sind und wobei jede Modulverbindungsplatte (24, 25, 26, 27; 24, 25, 26, 27, 50, 51) eine Plattenoberfläche mit einer speziellen Form hat und so gestaltet ist, dass sie elektrisch leitend ist, und auf elektrisch leitende Weise mit einem Chipverbindungskontakt (4, 5, 6, 7) verbunden ist und wobei die Formen der Plattenoberflächen der beiden Modulverbindungsplatten (24, 25, 26, 27; 24, 25, 26, 27, 50, 51) jedes Paars (22, 23; 22, 23, 56) identisch sind und wobei die Formen der Plattenoberflächen der Modulverbindungsplatten (24, 25, 26, 27; 24, 25, 26, 27, 50, 51) unterschiedlicher Paare (22, 23; 22, 23, 56) unterschiedlich sind und wobei in einer Ausgangsposition der Modulverbindungsplatten die Formen der Plattenoberflächen der Modulverbindungsplatten (24, 25, 26, 27; 24, 25, 26, 27, 50, 51) ein spezielles Plattenmuster ergeben und sich so unterscheiden, dass wenn beginnend von der Ausgangsposition alle Modulverbindungsplatten (24, 25, 26, 27; 24, 25, 26, 27, 50, 51) um eine Achse gemeinsam gedreht werden, die in Relation zu den Plattenoberflächen senkrecht verläuft und den Mittelpunkt (8) durchläuft, sich jeweils stets das gleiche Plattenmuster nach gemeinsamem Drehen um 180° ergibt.

8. Herstellungsverfahren nach Anspruch 7, wobei die Systemträgerkonfiguration (2) eine Hauptachse (9) hat, die den Mittelpunkt (8) durchläuft, und wobei von jedem Paar (22, 23; 22, 23, 56) von Modulverbindungsplatten eine Modulverbindungsplatte (24, 26; 24, 26, 50) in eine erste Richtung (34) weist, die parallel zur Hauptachse (9) verläuft und vom Mittelpunkt (8) wegweist, und die andere Modulverbindungsplatte (25, 27; 25, 27, 51) in eine zweite Richtung (35) weist, die parallel zur Hauptachse (9) verläuft und entgegengesetzt zur ersten Richtung (34) verläuft sowie vom Mittelpunkt (8) wegweist, und wobei die Modulverbindungsplatten (24, 26; 50, 24, 26), die in die erste Richtung (34) weisen, nebeneinander liegen und voneinander jeweils durch eine Trennzone (36; 48, 36) getrennt sind und wobei die Modulverbindungsplatten (25, 27; 25, 27, 51), die in die zweite Richtung (35) weisen, nebeneinander liegen und voneinander jeweils durch eine Trennzone (37; 49, 37) getrennt sind und wobei die Formen der Plattenoberflächen zweier Modulverbindungsplatten (24, 26, 27, 25; 50, 24, 26, 27, 25, 51), die nebeneinander liegen, unterschiedlich sind.

9. Herstellungsverfahren nach Anspruch 8, wobei die Formen der Plattenoberflächen zweier Modulverbindungsplatten (24, 26, 27, 25; 50, 24, 26, 27, 25, 51), die nebeneinander liegen, als Folge der Kennwerte der Trennzone (36, 37; 48, 36, 37, 49) unterschiedlich sind, die diese beiden Modulverbindungsplatten trennt, und wobei mindestens eine Trennzone (36, 37; 48, 49), die zwischen zwei Modulverbindungsplatten (24, 26, 27, 25; 20 50, 26, 25, 51) liegt, die nebeneinander liegen, schräg zur Hauptrichtung verläuft.

10. Herstellungsverfahren nach Anspruch 9, wobei die Trennzone (36, 37; 48, 49) in einer Geraden verläuft.

## Revendications

1. Module (1) comprenant une configuration de structure de broche de raccordement (2) et un chip (3) avec des contacts de raccordement de chip (4, 5, 6, 7),
ledit module (1) ayant un point milieu (8), et ledit module (1) étant conçu pour être utilisé dans un support de données (11) prévu pour des communications sans contact, dans lequel le module (1) a un chip (3) avec au moins deux paires (20, 21) de contacts de raccordement de chip (4, 5, 6, 7), et dans lequel la configuration de structure de broche de raccordement (2) a au moins deux paires (22, 23 ; 22, 23, 56) de plaques de raccordement de module (24, 25, 26, 27 ; 24, 25, 26, 27, 50, 51), dans lequel les deux plaques de raccordement du module (24, 25, 26, 27 ; 24, 25, 26, 27, 50, 51) de chaque paire (22, 23 ; 22, 23, 56) sont disposées pour le raccordement électriquement conducteur avec les contacts de raccordement de composant (4, 5, 6, 7) d'un parmi deux autres composants au moins (12, 13) dans chaque cas, et dans lequel chaque plaque de raccordement de module (24, 25, 26, 27 ; 24, 25, 26, 27, 50, 51) a une surface de plaque ayant une forme particulière et est conçue de manière à être électriquement conductrice et est raccordée de manière électriquement conductrice avec un contact de raccordement de chip (4, 5, 6, 7), et dans lequel les formes des surfaces de plaque des deux plaques de raccordement de module (24, 25, 26, 27 ; 24, 25, 26, 27, 50, 51) de chaque paire (22, 23 ; 22, 23, 56) sont identiques, et dans lequel les formes des surfaces de plaque des plaques de raccordement de module (24, 25, 26, 27 ; 24, 25, 26, 27, 50, 51) de différentes paires (22, 23 ; 22, 23, 56) sont différentes, et dans lequel, dans une position de départ des plaques de raccordement de module, les formes des surfaces de plaque des plaques de raccordement de module (24, 25, 26, 27 ; 24, 25, 26, 27, 50, 51) conduisent à un motif de plaque particulier et différent, de telle sorte que, si l'on part du point de départ, toutes les plaques de raccordement de module (24, 25, 26, 27 ; 24, 25, 26, 27, 50, 51) sont soumises ensemble à une rotation autour d'un axe qui est dirigé perpendiculairement par rapport aux surfaces des plaques et qui passe par le point milieu (8), le même motif de plaques se présentant toujours après une rotation de 180° dans chaque cas ; dans lequel un raccordement des plaques de raccordement de module (24, 25, 26, 27) à un premier, à un deuxième, à un troisième et à un quatrième contacts de raccordement de composant (14, 15, 16, 17) d'un support (11) dans deux positions du module (1) qui ont subi une rotation de 180° l'une par rapport à l'autre conduit à la même fonctionnalité électrique.

2. Module (1) selon la revendication 1, dans lequel le module (1) a un axe principal (9) passant par le point central (8), et dans lequel, parmi chaque paire (22, 23 ; 22, 23, 56) de plaques de raccordement de module, une première plaque de raccordement de module (24, 26 ; 24, 26, 50) pointe dans une première direction (34) qui s'étend parallèlement à l'axe principal (9) et pointe en s'éloignant à partir du point central (8), et l'autre plaque de raccordement de module (25, 27 ; 25, 27, 51) pointe dans une deuxième direction (35) qui s'étend parallèlement à l'axe principal (9) et s'étend dans une direction opposée à la première direction (34) et pointe en s'éloignant à partir du point central (8), et dans lequel les plaques de raccordement de module (24, 26 ; 50, 24, 26) qui pointent dans la première direction (34) se trouvent les unes à côté des autres et sont séparées dans chaque cas les unes des autres par une zone de séparation (36 ; 48, 36), et dans lequel les plaques de raccordement de module (25, 27 ; 25, 27, 51) qui pointent dans la deuxième direction (35) se trouvent les unes à côté des autres et sont séparées dans chaque cas les unes des autres par une zone de séparation (37 ; 49, 37), et dans lequel les formes des surfaces de plaque des deux plaques de raccordement de module (24, 26, 27, 25 ; 50, 24, 26, 27, 25, 51) se trouvant l'une à côté de l'autre sont différentes.

3. Module (1) selon la revendication 2, dans lequel les formes des surfaces de plaque des deux plaques de raccordement de module (24, 26, 27, 25 ; 50, 24, 26, 27, 25, 51) se trouvant l'une à côté de l'autre sont différentes, du fait des caractéristiques de la zone de séparation (36, 37 ; 48, 36, 37, 49) qui sépare ces deux plaques de raccordement de module.

4. Module (1) selon la revendication 3, dans lequel au moins une zone de séparation (36, 37 ; 48, 49) située entre deux plaques de raccordement de module (24, 26, 27, 25 ; 50, 24, 26, 27, 25, 51) se trouvant l'une à côté de l'autre s'étend obliquement par rapport à la direction principale.

5. Module (1) selon la revendication 4, dans lequel la zone de séparation (36, 37 ; 48, 49) s'étend selon une ligne droite.

6. Support de données (11) prévu pour des communications sans contact et qui contient un module (1) avec un chip (3) avec des contacts de raccordement de chip (4, 5, 6, 7) et de plus, au moins un autre composant électrique (12, 13) - raccordé de manière électriquement conductrice au chip (3) - avec des contacts de raccordement de composant (14, 15, 16, 17) et dans lequel le module (1) est conçu selon l'une des revendications 1 à 5, et dans lequel les plaques de raccordement de module (24, 25, 26, 27 ; 24, 25, 26, 27, 50, 51) de chaque paire (22, 23 ; 22, 23, 56) de plaques de raccordement de module sont raccordées aux contacts de raccordement de composant (14, 15, 16, 17) d'un des deux autres composants au moins (12, 13) dans chaque cas.

7. Procédé de production d'un module (1) selon l'une quelconque des revendications 1 à 5, utilisant une configuration de structure de broche de raccordement (2) qui est proposée pour le module et qui a un point central (8), dans lequel la configuration de structure de broche de raccordement (2) a au moins deux paires (22, 23 ; 22, 23, 56) de plaques de raccordement de module (24, 25, 26, 27 ; 24, 25, 26, 27, 50, 51),
dans lequel les deux plaques de raccordement de module (24, 25, 26, 27 ; 24, 25, 26, 27, 50, 51) de chaque paire (22, 23 ; 22, 23, 56) sont disposées pour le raccordement électriquement conducteur avec les contacts de raccordement de composant (4, 5, 6, 7) d'un parmi au moins deux autres composants (12, 13), dans chaque cas, et dans lequel chaque plaque de raccordement de module (24, 25, 26, 27 ; 24, 25, 26, 27, 50, 51) a une surface de plaque ayant une forme particulière et est conçue de manière à être électriquement conductrice et est raccordée de manière électriquement conductrice avec un contact de raccordement de chip (4, 5, 6, 7), et dans lequel les formes des surfaces de plaque des deux plaques de raccordement de module (24, 25, 26, 27 ; 24, 25, 26, 27, 50, 51) de chaque paire (22, 23 ; 22, 23, 56) sont identiques et
dans lequel les formes des surfaces de plaque des deux plaques de raccordement de module (24, 25, 26, 27 ; 24, 25, 26, 27, 50, 51) de différentes paires (22, 23 ; 22, 23, 56) sont différentes, et dans lequel, dans une position de départ des plaques de raccordement de module, les formes des surfaces de plaque des plaques de raccordement de module (24, 25, 26, 27 ; 24, 25, 26, 27, 50, 51) conduisent à un motif de plaque particulier et diffèrent de telle sorte que, si l'on part du point de départ, lorsque toutes les plaques de raccordement de module (24, 25, 26, 27 ; 24, 25, 26, 27, 50, 51) sont soumises ensemble à une rotation autour d'un axe qui est dirigé perpendiculairement par rapport aux surfaces des plaques et qui passe par le point milieu (8), le même motif de plaques se présente toujours après une rotation de 180° dans chaque cas.

8. Procédé de production selon la revendication 7, dans lequel la configuration de structure de broche de raccordement (2) a un axe principal (9) passant par le point central (8) et dans lequel, parmi chacune des paires (22, 23 ; 22, 23, 56) de plaques de raccordement de module, une plaque de raccordement de module (24, 26 ; 24, 26, 50) pointe dans une première direction (34) qui s'étend parallèlement à l'axe principal (9) et pointe en s'éloignant à partir du point central (8), et l'autre plaque de raccordement de module (25, 27 ; 25, 27, 51) pointe dans une deuxième direction (35) qui s'étend parallèlement à l'axe principal (9) et s'étend dans une direction opposée à la première direction (34) et pointe en s'éloignant à partir du point central (8), et dans lequel les plaques de raccordement de module (24, 26 ; 50, 24, 26) qui pointent dans la première direction (34) se trouvent les unes à côté des autres et sont séparées dans chaque cas les unes des autres par une zone de séparation (36 ; 48, 36), et dans lequel les plaques de raccordement de module (25, 27 ; 25, 27, 51) qui pointent dans la deuxième direction (35) se trouvent les unes à côté des autres et sont séparées dans chaque cas les unes des autres par une zone de séparation (37 ; 49, 37), et dans lequel les formes des surfaces de plaque des deux plaques de raccordement de module (24, 26, 27, 25 ; 50, 24, 26, 27, 25, 51) se trouvant l'une à côté de l'autre sont différentes.

9. Procédé de fabrication selon la revendication 8, dans lequel les formes des surfaces de plaque des deux plaques de raccordement de module (24, 26, 27, 25 ; 20, 50, 26, 25, 51) se trouvant l'une à côté de l'autre sont différentes, du fait des caractéristiques de la zone de séparation (36, 37 ; 48, 36, 37, 49) qui séparent ces deux plaques de raccordement de module, et dans lequel au moins une zone de séparation (36, 37 ; 48, 49) située entre deux plaques de raccordement de module (24, 26, 27, 25 ; 50, 24, 26, 27, 25, 51) se trouvant l'une à côté de l'autre s'étend obliquement par rapport à la direction principale.

10. Procédé de fabrication selon la revendication 9, dans lequel la zone de séparation (36, 37 ; 48, 49) s'étend selon une ligne droite.
